Europäisches Patentamt

European Patent Office

Office européen des brevets

(19)

(11) Veröffentlichungsnummer: **0 143 230**
**B1**

(12) **EUROPÄISCHE PATENTSCHRIFT**

(45) Veröffentlichungstag der Patentschrift: **07.11.90**

(21) Anmeldenummer: **84110900.2**

(22) Anmeldetag: **12.09.84**

(51) Int. Cl.⁵: **B 08 B 9/08,** B 01 D 1/30

(54) **Vorrichtung zum Entleeren von Destillierblasen.**

(30) Priorität: **21.10.83 DE 3338332**

(43) Veröffentlichungstag der Anmeldung:
**05.06.85 Patentblatt 85/23**

(45) Bekanntmachung des Hinweises auf die
Patenterteilung:
**07.11.90 Patentblatt 90/45**

(84) Benannte Vertragsstaaten:
**CH FR GB IT LI NL**

(56) Entgegenhaltungen:
**CH-A- 467 010**
**DE-C- 141 449**
**FR-A-1 334 326**

(73) Patentinhaber: **MULTIMATIC Reinigungs-
Systeme GmbH & Co.
Gerdener Strasse 71
D-4520 Melle 1 (DE)**

(72) Erfinder: **Kötter, Gustav
Meller Berg 44
D-4520 Melle 1 (DE)**
Erfinder: **Mutschelkanus, Peter, Dipl.-Ing.
Mühlenweg 6
D-4520 Melle 3 (DE)**

(74) Vertreter: **Gramm, Werner, Prof. Dipl.-Ing. et al
Patentanwälte Gramm + Lins Theodor-Heuss-
Strasse 2
D-3300 Braunschweig (DE)**

**Beschriebung**

Die Erfindung betrifft eine Vorrichtung zum Ausräumen und Reinigen von Destillierblasen von Trockenreinigungsvorrichtungen mit einem an einer Stange befestigten Kratzer.

Bei Chemischreinigungsmaschinen (Trockenreinigungsvorrichtungen) muß das Lösungsmittel, beispielsweise Perchloräthylen, in regelmäßigen Abständen durch Destillation gereinigt werden, um die volle Reinigungskraft des Lösungsmittels wieder herzustellen und um eine Verschmutzung der Garderobe durch das Lösungsmittel selbst zu verhindern.

Bei einer aus der DE—AS 24 03 026 bekannten Vorrichtung der eingangs angegebenen Art zum kontinuierlichen Ausdestillieren der das Lösungsmittel verunreinigenden Rückstand sind in der die Destillierblase bildenden Kammer kaskadenartig übereinander Heizplatten angeordnet, über die das zu destillierende Lösungsmittel bis zu einer am Boden der Kammer angeordneten Transportschnecke läuft, die die nicht verdampften mit Lösungsmittel durchsetzten Rückstände in einen Sammelbehälter austrägt, wobei an einer vertikalen Welle die stangenbildende radiale Arme befestigt sind, die mit Schabern oder Kratzern besetzt sind, die Oberflächen der ringscheibenförmigen Heizplatten überstreichen und die sich auf den Heizplatten absetzenden Rückstände und die Lösungsmittel auf die jeweils darunterliegende Heizplatte befördern, bis der unterste mit Schalbeisten besetzte Arm die Rückstände in die Einlauföffnung der Transportschnecke schiebt.

Übliche Chemischreinigungsmaschinen sind jedoch nicht mit geschlossenen, kontinuierlich arbeitenden Destilliereinrichtungen versehen, sondern mit Destillierblasen, die nach Beendigung des Destilliervorganges zur Entnahme der Destillationsrückstände, die dickflüssig sind und zum Verkrusten neigen, geöffnet werden müssen, so daß die Rückstände mit Schabern oder Kratzern von den Wandungen der Destillierblase entfernt werden müssen. Das Reinigen der Destillierblase ist mit Beeinträchtigungen des Bedienungspersonals verbunden, weil sich ein Austritt von Lösungsmitteldampf nicht verhindern läßt und die zulässigen MAK-Werte häufig überschritten werden.

Bei einer aus der US—PS 42 79 704 bekannten Destilliervorrichtung, deren Destillierblase geschlossen ist, werden die Destillationsrückstände durch einen mit Schneckengängen versehenen bohrerähnlichen Schabkopft von der Bodenplatte gelockert, so daß die anschließend mit heißem Wasser ausgespült werden können. Diese Destilliervorrichtung eignet sich jedoch auch nicht für übliche Chemischreinigungsmaschinen, weil das Problem offen bleibt, wie das mit Destillationsrückständen und Lösungsmitteln durchsetzte Spülwasser entsorgt werden kann.

Aufgabe der Erfindung ist es daher, eine Vorrichtung zum Ausräumen der Destillierblase zu schaffen, die einerseits eine gute und einfache Reinigung ermöglicht und andererseits den Austritt von Lösungsmitteldampf aus der Destillierblase weitgehend verhindert.

Erfindungsgemäß wird diese Aufgabe durch einen Vorsatzbehälter gelöst, der eine mit einer Öffnung versehene Rückwand mit Befestigungsmitteln aufweist, der an der Destillierblase befestigt wird und diese verschließt, dessen Öffnung in Verbindung mit der Entsorgungsöffnung der Destillierblase steht, in dessen Vorderwand eine Halterung allseitig schwenkbar gelagert ist, die mit einer diese durchsetzenden Führung versehen ist, in der die Stange axial verschieblich gehaltert ist, und an dessen durch einen Schieber verschlossenen Boden ein Auffangbehälter durch Anschlußmittel befestigt ist. Der erfindungsgemäße Vorsatzbehälter verschließt anstelle der sonst üblichen Verschlußkappe die Entsorgungsöffnung der Destillierblase, so daß dieser in einfacher Weise gegen die Verschlußkappen austauschbar ist und eine einfache Nachrüstung von Chemischreinigungsmaschinen mit den erfindungsgemäßen Vorsatzbehältern vorgenommen werden kann. Während des normalen Betriebes befindet sich der Kratzer mit der Stange in einer in die Destillierblase eingeschobenen Stellung, so daß die aus dem Vorsatzbehälter herausragende Stange nicht stört. Die Bodenschieber des Vorsatzbehälters sind geschlossen, so daß ein vollständiger Abschluß der Destillierblase durch den Vorsatzbehälter gewährleistet ist. Zum Zwecke der Entsorgung der Destillierblase wird auf die unterhalb des Bodenschiebers des Vorsatzbehälters vorgesehene Führungen der Auffangbehälter aufgeschoben und die Verschlußschieber des Vorsatzbehälters sowie des Auffangbehälters werden geöffnet, so daß die Destillierrückstände aus der Destillierblase über den Vorsatzbehälter in den Auffangbehälter fließen können. Schlecht fließende oder verkrustete Teile werden mit dem Kratzer ausgeschabt und in den Auffangbehälter befördert. Da der Auffangbehälter dicht an den Vorsatzbehälter angeschlossen ist, ist ein Austritt von Lösungsmitteldämpfen weitgehend vermieden. Nachdem die Lösungsmittelrückstände in den Auffangbehälter befördert worden sind, werden die Verschlußschieber geschlossen und der Auffangbehälter kann in einen von Entsorgungsunternehmen bereitgestellten Tank oder dergleichen entleert werden.

Zweckmäßigerweise ist der Kratzer am Ende der Stange befestigt und der Endbreich der Stange ist abgebogen oder abgewinkelt, so daß durch entsprechendes Schwenken oder Drehen im wesentlichen alle Bereiche der Innenwandung der Destillierblase mit dem Kratzer überstrichen werden können.

Der Kratzer kann aus einem mit der Stirnseite der Stange T-förmig verbundenen etwa rechteckigen Blech bestehen, dessen einer Schenkel abgewinkelt ist. Durch diese Ausgestaltung weist der Kratzer drei Schabekanten auf, nämlich die Endkanten und die durch die Abwinklung gebildete Kante.

In weiterer Ausgestaltung ist vorgesehen, daß auf dem geraden Teil der Stange ein etwa rechteckiges Kratzblech befestigt ist, das dem Austragen der Destillationsrückstände aus den öffnungsnahen Bereichen der Destillierblase und dem Vorsatzbehälter dient.

Eine gute Schwenkbarkeit der Stange ist gewährleistet, wenn deren Halterung aus einer in einer entsprechenden Schale der Vorderwand gelagerten Gelenkkugel besteht, die mit einem axialen Führungskanal für die Stange versehen ist. Um eine gute Dichtigkeit zu gewährleisten, kann der Führungskanal aus einer Stopfbüchse bestehen.

Eine einfache Montage des Vorsatzbehälters im Bereich der Entsorgungsöffnung der Destilliertblase ist gewährleistet, wenn deren Rückwand mit den Befestigungsmitteln einer Verschlußklappe versehen ist. Die Befestigungsmittel können also aus Gelenkösen an einer Seite und einem üblichen Verschlußriegel auf der anderen Seite bestehen.

Zweckmäßigerweise ist die Vorderwand des Vorsatzbehälters abgeschrägt und mit einem durch eine Glasscheibe oder dergleichen verschlossenen Fenster versehen, so daß der Reinigungsvorgang in einfacher Weise beobachtet werden kann.

Der Auffangbehälter ist zweckmäßigerweise unterhalt seiner Führungen mit mindestens einem Verschlußschieber versehen, so daß er nach seiner Befüllung und Abnahme von dem Vorsatzbehälter verschlossenen werden kann. Um den Auffangbehälter entleeren zu können, ist er zweckmäßgerweise im Bereich seines Bodens mit einem Ablaßventil versehen. Der Boden des Auffangbehälters ist zweckmäßigerweise zu dem Ablaßventil oder Ablaßschieber hin geneigt.

In den Auffangbehälter kann auch ein Beutel aus Kunststoff oder Metallfolie eingelegt sein, der der Aufnahme der ausgetragenen Destillationsrückstände dient und zu deren Beseitigung verschlossen und aus dem Behälter entnommen wird.

Ein Ausführungsbeispiel der Erfindung wird nachstehend anhand der Zeichnung näher erläutert. In dieser zeigt

Fig. 1 einen vertikalen Längsschnitt durch den Vorsatzbehälter mit mit diesem verbundenen Auffangbebehälter,

Fig. 2 eine Vorderansicht des Vorsatzbehälters sowie des Auffangbehälters nach Fig. 1,

Fig. 3 einen Horizontalschnitt durch den Vorsatzbehälter und die Destillierblase längs der Linie III—III in Fig. 2,

Fig. 4 eine Draufsicht auf den Auffangbehälter und

Fig. 5 einen Schnitt durch das Kugelgelenk der Stange in vergrößerter Darstellung.

Der Vorsatzbehälter 1 weist zueinander parallele Seitenwände 2, 3 sowie eine Vorderwand auf, deren oberer Teil 4 abgeschrägt und mit einem Fenster 5 versehen ist, das durch eine runde Fensterscheibe geschlossen ist. Der untere Teil 6 der Vorderwand verläuft senkrecht und in dieser ist mittig die Lagerung für das Kugelgelenk 7 der die Kratzer 8, 9 tragenden Stange 10 angeordnet. Die vertikale Rückwand des Vorsatzbehälters 1 ist mit einer Öffnung 11 versehen, die mit der Austragsöffnung der Destillierblase 12 fluchtet. Beidseits der Öffnung 11 ist der Vorsatzbehälter 1 mit Mitteln 13 zur Befestigung an dem Öffnungsbereich der Destillierblase versehen. Die waagerechte Bodenplatte des Vorsatzbehälters 1 ist mit einer Öffnung 14 versehen, die durch einen Absperrschieber 15 verschließbar ist, der in dem mit der Bodenplatte verbundenen Schiebergehäuse 16 verschieblich geführt ist. Auf seiner Unterseite ist das Schiebergehäuse 16 mit einer gelochten Platte 17 verbunden, deren einander gegenüberliegenden und zueinander parallelen Ränder 17' in entsprechende Führungsnuten 18 des Auffangbehälters 19 einschiebbar sind. Der Auffangbehälter 19 ist unterhalb der Führungsnuten 18 mit einem Schieber 20 versehen, durch den die Füllöffnung 22 des Auffangbehälters 19 verschließbar ist. Der Auffangbehälter 19 weist einen abgeschrägten Boden 23 auf, an dessen tiefster Stelle der Auslaßhahn 24 angeordnet ist.

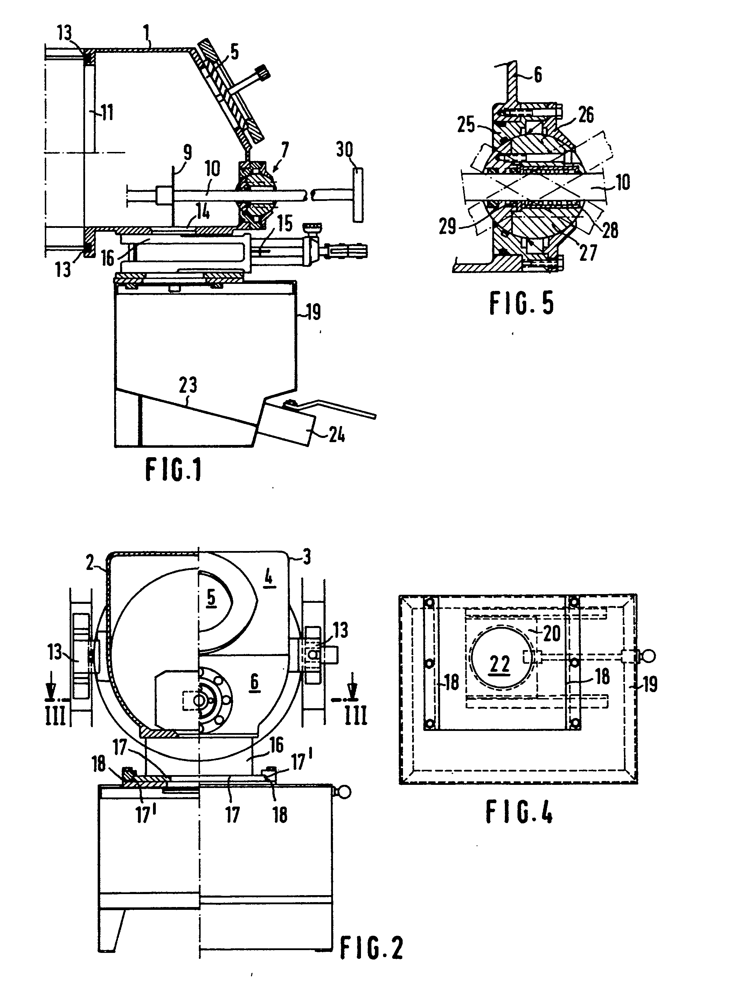

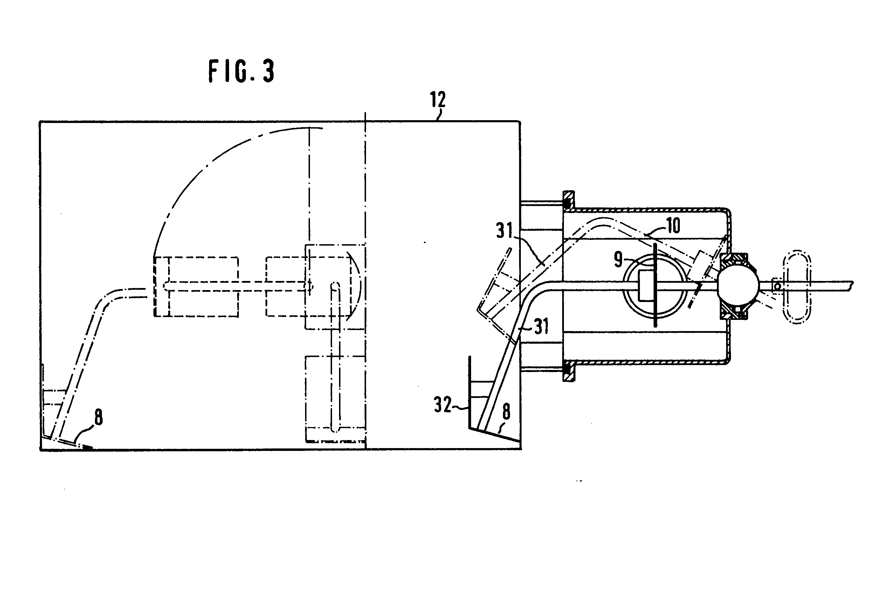

Das Kugelgelenk 7 besteht, wie aus Fig. 5 ersichtlich ist, aus einer in dem Teil 6 der Vorderwand des Vorsatzbehälters 1 vorgesehenen halbkugeligen Gelenkschale 25, auf die die andere halbkugelige Gelenkschale 26 aufgeschraubt ist. In den Gelenkschalen 25, 26 ist die Gelenkkugel 27 gehaltert, die mit einer axialen Bohrung versehen ist, in der die Kugelbüchse 28 und Dichtungselemente gehalten sind. In der Kugelbüchse 28 und den Dichtungsring 29 ist die Stange 10 axial verschieblich geführt. An ihrem hinteren Ende weist die Stange 10 einen Betätigungsgriff 30 auf.

Der vordere Endbereich der Stange 10 weist ein abgebogenes Ende 31 auf, an dessen Stirnseite der Kratzer 8 befestigt ist. Der Kratzer 8 besteht auf einer um die Kante 32 abgewinkelten rechteckigen Platte, deren Schenkel mit unterschiedlichen Winkeln spitzwinkelig zu dem abgewinkelten Ende 31 verlaufen. Wie aus Fig. 3 ersichtlich ist, läßt sich durch entsprechendes Schwenken und Drehen der Stange 10 mit dem Kratzer 8 im wesentlichen der gesamte Bereich der Innenwandung der Destillierblase 12 überstreichen. In dem mittleren Bereich der Fig. 3 ist eine Vorderansicht des Kratzers 8 in unterschiedlichen Stellungen über die Höhe des Behälters der Destillierblase 12 dargestellt.

Auf dem geraden Teil der Stange 10 ist der Kratzer 9 befestigt, der aus einem ebenen rechteckigen Blech besteht.

**Patentansprüche**

1. Vorrichtung zum Ausräumen und Reinigen von Destillierblasen von Trockenreinigungsvorrichtungen mit einem an einer Stange (10) befestigten Kratzer (8, 9), gekennzeichnet durch einen Vorsatzbehälter (1),

der eine mit einer Öffnung (11) versehene Rückwand mit Befestigungsmitteln (13) aufweist,

der an der Destillierblase befestigt wird und diese verschließt,

dessen Öffnung (11) in Verbindung mit der Entsorgungsöffnung der Destillierblase steht,

in dessen Vorderwand (4, 6) eine Halterung (7) allseitig schwenkbar gelagert ist, die mit einer diese durchsetzenden Führung (28) versehen ist, in der Stange (10) axial verschieblich gehaltert ist,

und an dessen durch einen Schieber (15) verschlossenen Boden ein Auffangbehälter (19) durch Anschlußmittel (17', 18) befestigt ist.

2. Vorrichtung nach Anspruch 1, dadurch gekennzeichnet, daß der Kratzer (8, 9) am Ende der Stange (10) befestigt und der Endbereich (31) der Stange (10) abgebogen oder abgewinkelt ist.

3. Vorrichtung nach Anspruch 1 oder 2, dadurch gekennzeichnet, daß der Kratzer aus einem mit der Stirnseite der Stange (10) T-förmig verbundenem, etwa rechteckigen Blech (8) besteht, dessen einer Schenkel abgewinkelt ist.

4. Vorrichtung nach einem der Ansprüche 1 bis 3, dadurch gekennzeichnet, daß auf den geraden Teil der Stange (10) ein etwa rechteckiges Kratzblech (9) befestigt ist.

5. Vorrichtung nach einem der Ansprüche 1 bis 4, dadurch gekennzeichnet, daß die Halterung aus einer in einer entsprechenden Schale (25, 26) der Vorderwand (4, 6) gelagerten Gelenkkugel (27) besteht, mit einem axialen Führungskanal für die Stange versehen ist.

6. Vorrichtung nach einem der Ansprüche 1 bis 5, dadurch gekennzeichnet, daß der Führungskanal aus einer Stopf- oder Kugelbüchse (28) besteht.

7. Vorrichtung nach einem der Ansprüche 1 bis 6, dadurch gekennzeichnet, daß die Rückwand mit den Befestigungsmitteln (13) einer Verschlußkappe versehen ist.

8. Vorrichtung nach einem der Ansprüche 1 bis 7, dadurch gekennzeichnet, daß die Vorderwand (4, 6) abgeschrägt und mit einem durch eine Glasscheibe oder dergleichen verschlossenem Fenster (5) versehen ist.

9. Vorrichtung nach einem der Ansprüche 1 bis 8, dadurch gekennzeichnet, daß der Boden unterhalb des Bodenverschlußschiebers (20) mit im Abstand voneinander angeordneten parallelen Führungen (17') und der Auffangbehälter (19) mit entsprechenden komplementären Führungen (18) versehen ist.

10. Vorrichtung nach einem der Ansprüche 1 bis 9, dadurch gekennzeichnet, daß der Auffangbehälter (19) unterhalb seiner Führungen (18) mit mindestens einem Verschlußschieber (20) versehen ist.

11. Vorrichtung nach einem der Ansprüche 1 bis 10, dadurch gekennzeichnet, daß der Auffangbehälter (19) im Bereich seines Bodens (23) mit einem Ablaßventil (24) versehen ist.

12. Vorrichtung nach Anspruch 11, dadurch gekennzeichnet, daß der Boden (23) des Auffangbehälters (19) zu dem Ablaßventil (24) hin geneigt ist.

13. Vorrichtung nach einem der vorhergehenden Ansprüche, dadurch gekennzeichnet, daß in den Auffangsbehälter (19) ein Beutel aus Kunststoff- oder Metallfolie eingelegt ist.

## Revendications

1. Dispositif pour vider et nettoyer des ballons de distillation d'installations de nettoyage à sec, comportant un racloir (8, 9) fixé à une tringle (10), caractérisé par un récipient adaptateur (1),

qui présente une paroi arrière, munie d'une ouverture (11), avec des moyens de fixation (13),

qui est fixé au ballon de distillation et l'obture,

dont l'ouverture (11) est reliée à l'ouverture d'évacuation du ballon de distillation,

dans la paroi avant (4, 6) duquel est porté, avec liberté de pivoter de tous les côtes, un support (7) qui présente un guidage (28) qui le traverse et dans lequel la tringle (10) est supportée pour pouvoir coulisser axialement,

et au plancher, obturé par un tiroir (15), duquel est fixé, par des moyens de raccordement (17', 18), un récipient de collecte (19).

2. Dispositif selon la revendication 1, caractérisé en ce que le racloir (8, 9) est fixé à l'extrémité de la tringle (10) et que la zone d'extrémité (31) de la tringle (10) est courbée ou coudée.

3. Dispositif selon la revendication 1 ou 2, caractérisé en ce que le racloir est constitué d'un tôle (8) à peu près rectangulaire reliée à la face frontale de la tringle (10), de façon à former un T dont l'une des branches est repliée.

4. Dispositif selon l'une des revendications 1 à 3, caractérisé en ce que sur la partie droite de la tringle (10) est fixée une tôle à peu près rectangulaire (9) formant racloir.

5. Dispositif selon l'une des revendications 1 à 4, caractérisé en ce que le support est constitué d'une sphère d'articulation (27) qui porte dans une coque correspondante (25, 26) de la paroi avant (4, 6) et qui présente un canal de guidage axial pour la tringle.

6. Dispositif selon l'une des revendications 1 à 5, caractérisé en ce que le canal de guidage est constitué d'une douille à garniture ou à billes (28).

7. Dispositif selon l'une des revendications 1 à 6, caractérisé en ce que la paroi arrière est munie des moyens de fixation (13) d'un capuchon d'obturation.

8. Dispositif selon l'une des revendications 1 à 7, caractérisé en ce que la paroi avant (4, 6) est inclinée et munie d'une fenêtre (5) obturée par une vitre ou analogue.

9. Dispositif selon l'une des revendications 1 à 8, caractérisé en ce que le plancher présente, en dessous du tiroir (20) d'obturation du plancher, des guidage (17') parallèles et disposés à une certaine distance l'un de l'autre et que le récipient de collecte (19) présente des guidages complémentaires (18).

10. Dispositif selon l'une des revendications 1 à 9, caractérisé en ce que le récipient de collecte (19) est muni, en dessous de ses guidages (18), d'au moins un tiroir d'obturation (20).

11. Dispositif selon l'une des revendications 1 à 10, caractérisé en ce que le récipient de collecte (19) est muni, dans la zone de son plancher (23), d'une vanne d'évacuation (24).

12. Dispositif selon la revendication 11, caracté-

risé en ce que le plancher (23) du récipient de collecte (19) est incliné en direction de la vanne d'évacuation (24).

13. Dispositif selon l'une des revendications précédentes, caractérisé en ce que dans le récipient de collecte (19) est placé un sachet constitué d'une feuille de matière plastique ou d'une feuille de métal.

**Claims**

1. Device for clearing out and cleaning distilling flasks of dry cleaning devices having a scraper (8, 9), attached to a rod (10), characterized by a front container (1),

which has a rear wall, provided with an opening (11), with attachment means (13),

which is attached to the reboiler and closes the latter, the opening (11) of which is connected to the disposal opening of the reboiler,

in the front wall (4, 6) of which a holder (7) is mounted so as to be swivelable on all sides, which holder is provided with a guide (28) penetrating said holder, in which guide the rod (10) is held as to be axially displaceable,

and to the bottom of which a receiver (19) is attached by connection means (17', 18), said bottom being closed by a slide (15).

2. Device according to Claim 1, characterized in that the scraper (8, 9) is attached to the end of the rod (10) and the end region (31) of the rod (10) is edt or angled off.

3. Device according to Claim 1 or 2, characterized in that the scraper is composed of a metal sheet (8) which is connected in a T shape to the end face of the rod (10), is approximately rectangular, and one limb of which is angled off.

4. Device according to one of Claims 1 to 3, characterized in that an approximately rectangular scraping sheet (9) is attached on the straight part of the rod (10).

5. Device according to one of Claims 1 to 4, characterized in that the holder is composed of a joint ball (27) which is mounted in a corresponding pan (25, 26) in the front wall (4, 6) and which is provided with an axial guide channel for the rod.

6. Device according to one of Claims 1 to 5, characterized in that the guide channel is composed of a stuffing box or ball socket (28).

7. Device according to one of Claims 1 to 6, characterized in that the rear wall is provided with the attachment means (13) of a closure cap.

8. Device according to one of Claims 1 to 7, characterized in that the front wall (4, 6) is sloped and is provided with a window (5) closed by a pane of glass or the like.

9. Device according to one of Claims 1 to 8, characterized in that the bottom is provided with parallel guides (17'), arranged spaced apart, below the bottom closure slide (20) and the receiver (19) is provided with corresponding complementary guides (18).

10. Device according to one of Claims 1 to 9, characterized in that the receiver (19) is provided with at least one closure slide (20) below its guides (18).

11. Device according to one of Claims 1 to 10, characterized in that the receiver (19) is provided with a discharge valve (24) in the region of its bottom (23).

12. Device according to Claim 11, characterized in that the bottom (23) of the receiver (19) is inclined towards the discharge valve (24).

13. Device according to one of the preceding claims characterized in that a bag made of plastic film or metal foil is placed inside the receiver (19).

FIG.1

FIG.5

FIG.2

FIG.4

FIG. 3